Europäisches Patentamt

European Patent Office

Office européen des brevets

(11) Veröffentlichungsnummer: **0 221 352**
**A1**

(12) # EUROPÄISCHE PATENTANMELDUNG

(21) Anmeldenummer: 86113576.2

(22) Anmeldetag: 02.10.86

(51) Int. Cl.⁴: **F 16 C 32/06**

(30) Priorität: 07.10.85 DE 3535774

(43) Veröffentlichungstag der Anmeldung:
13.05.87 Patentblatt 87/20

(84) Benannte Vertragsstaaten:
AT BE CH DE ES FR GB IT LI LU NL SE

(71) Anmelder: **INTERATOM Gesellschaft mit beschränkter Haftung**
**Friedrich-Ebert-Strasse**
**D-5060 Bergisch Gladbach 1(DE)**

(72) Erfinder: **Jansing, Walter, Dipl.-Ing.**
**Steinacker 41B**
**D-5060 Bergisch Gladbach(DE)**

(72) Erfinder: **Junghans, Ewald, Dipl.-Ing.**
**Habichtweg 1**
**D-5060 Bergisch Gladbach(DE)**

(74) Vertreter: **Mehl, Ernst, Dipl.-Ing. et al,**
**Postfach 22 01 76**
**D-8000 München 22(DE)**

(54) Gasstatisches Lager mit unterteilten Lagerflächen.

(57) Eine Ausgestaltung von gasstatischen Lagern für Wellen (1, 2) mit porösen, gezielt verdichteten Lagerflächen (11, 21 - 25), die bei gleichbleibender Baulänge eine größere Lagerfläche unterzubringen gestattet (wodurch der Druck des Speisegases herabgesetzt und/oder die Größe der Lagerspalte vergrößert werden kann), oder aber bei gleichbleibender Lagerfläche die Baulänge verringert. Durch Aufsetzen eines etwa topfförmigen Zusatzteils (2) auf die Welle (1) und entsprechende Ausformung der Lagerschalen (4, 5) werden entsprechende Radial- (11, 21, 22) und Axiallagerflächen (23 - 25) geschaffen. Das Lager ist dann z.B. an den geringen, von einem Verbrennungsmotor-Turbolader gelieferten Speisegasdruck angepaßt.

EP 0 221 352 A1

Interatom GmbH
5060 Bergisch Gladbach 1

Gasstatisches Lager mit unterteilten Lagerflächen

Die vorliegende Erfindung betrifft ein gasstatisches Lager nach dem Oberbegriff des 1. Anspruchs. In der DE-A-32 30 232 hat die Anmelderin eine Lagerschale und ein zu ihrer Herstellung bestimmtes Verfahren beschrieben, und im einzelnen dargelegt, wie und warum derartige Lagerschalen eine schwingungsfreie Lagerung einer Welle gestatten. Da der in dem größeren, unverdichteten Teil der Lagerschale dem Speisegas entgegengesetzte Widerstand gegenüber dem in der verdichteten Schicht auftretenden nur gering ist, kann die Lagerschale von der einfachen hohlzylindrischen Form abweichen und z. B. als gleichzeitig wirkendes Radial- und Axiallager ausgestaltet werden. Eine derartige Lagerschale hat die Anmelderin in ihrer nicht vorveröffentlichten deutschen Patentanmeldung P 35 20 717.5 am Beispiel eines Turboladers für Verbrennungsmotoren beschrieben. Hier wird als Speisegas für das Lager Luft verwendet, die aus dem vom Lader gelieferten Strom abgezweigt wurde. Das Speisegas hat so nur einen verhältnismäßig geringen Druck, insbesondere während des Betriebes bei Teillast. Gleichzeitig besteht das Bedürfnis, die Abmessungen des Turboladers und damit auch den für die Lagerung seiner Welle zur Verfügung stehenden Raum zu verkleinern. Auch könnte es Erleichterungen für die Fertigung bringen, wenn die bislang geforderten sehr engen Toleranzen zwischen Lagerschale und Welle erweitert werden könnten, d. h. ein größerer Lagerspalt in Kauf genommen werden könnte.

Aufgabe der vorliegenden Erfindung ist ein gasstatisches Lager, das bei nur unwesentlicher Vergrößerung seiner Abmessungen größere Lagerflächen aufweist oder aber bei gleichbleibender Größe der Lagerflächen kleinere Außenabmessungen aufweisen kann. Bei gleichbleibendem Trägheitsmoment (d. h. gleicher Fähigkeit zu schnellem Drehzahlwechsel) wird so die Tragfähigkeit des Lagers erhöht.

Aufgabe der vorliegenden Erfindung ist ein gasstatisches Lager, das bei etwa gleichbleibenden äußeren Abmessungen größere Lagerflächen aufweist (wodurch der zu seinem Betrieb erforderliche Gasdruck herabgesetzt oder eine größere Lagerspaltbreite toleriert werden kann) oder aber ein solches, das bei gleich großen Lagerflächen in seinen äußeren Abmessungen verringert werden kann.
Die Lösung dieser Aufgabe erfolgt durch die im kennzeichnenden Teil des 1. Anspruchs angegebenen Mittel. Dadurch, daß mehrere konzentrisch umeinander angeordnete Lagerflächen geschaffen werden, kann die Baulänge des Lagers erheblich verkürzt werden bzw. stehen bei gleicher Baulänge sehr viel größere Flächen für die radiale Lagerung zur Verfügung. Ähnliches gilt für die axiale Lagerung, wo gegebenenfalls der erforderliche Lagerflächenradius verringert werden kann.

Eine bevorzugte Ausführungsform dieses Erfindungsgedankens ist im zweiten Anspruch definiert. Dabei kann das hohlzylindrische Teil der Welle mit letzterer einstückig hergestellt oder aber nach getrennter Herstellung auf letzterer aufgeschoben sein.

Speziell für den wahrscheinlicheren Fall, daß nicht die Welle, sondern die Lagerschale aus dem porösen, an seiner Oberfläche gezielt verdichtetem Material hergestellt ist, werden im zweiten und dritten Anspruch bevorzugte Ausführungsformen einer geteilten Lagerschale angegeben,

85 P 6749 E

0221352

die den zusätzlichen Vorteil einer leichteren Montage bieten. Mit Hilfe der im fünften Anspruch angegebenen Ausgestaltung der Erfindung kann der Speisegasdruck z. B. an die möglicherweise in Radial- und Axialrichtung unterschiedlichen Erfordernisse angepaßt werden.

Im 6. Anspruch wird vorgeschlagen, die Strömungswege für das frische und das verbrauchte Speisegas voneinander zu trennen, um Kurzschlußströmungen zu unterbinden.

Die im 7. Anspruch vorgeschlagene Abdichtung der Abschlußkanäle kann durch das Einsetzen besonderer, nicht poröser Rohre oder dergleichen geschehen, aber auch durch eine Nachbearbeitung der Oberfläche der Kanäle mit dem Ziel, die Poren des Lagerschalenmaterials zu schließen.

Eine gleichmäßige Versorgung der gesamten Lagerschale mit Speisegas und damit auch ein über die Fläche gleichmäßiger Gasdruck im Lagerspalt werden durch die Ausgestaltung der Erfindung gemäß dem 8. Anspruch erleichtert.

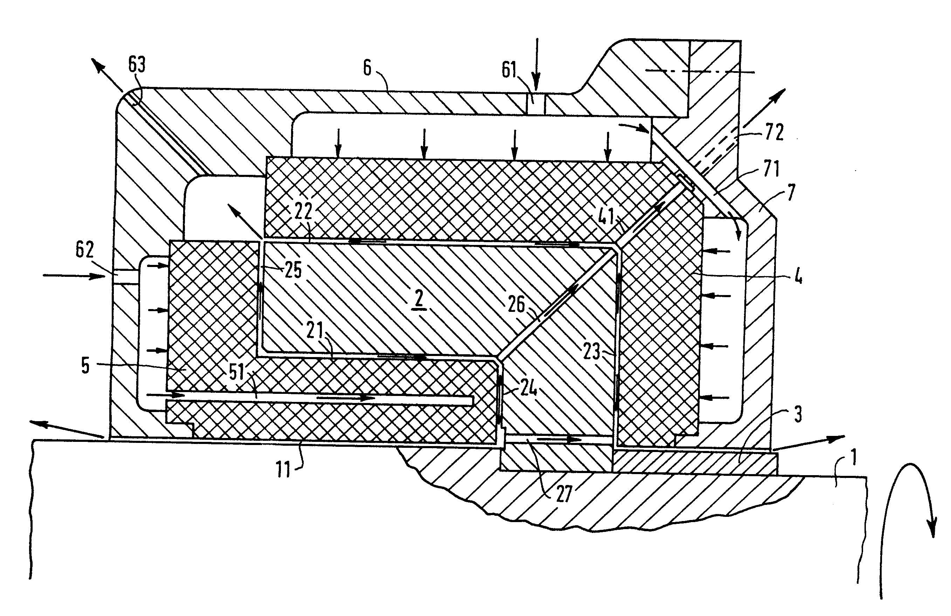

Ein Ausführungsbeispiel der Erfindung ist in der Zeichnung dargestellt, und zwar zeigt diese einen halben Längsaxialschnitt.

Die dargestellte Lagerung besteht aus einer Welle 1, die im Beispiel massiv ausgeführt ist, aber auch hohlzylindrisch sein kann. Gegen einen zu diesem Zweck an der Welle 1 angebrachten Anschlag ist ein zusätzliches, hohlzylindrisches, einseitig mit einem Boden versehenes Teil 2 geschoben und mit Hilfe eines Ringes 3 abgesichert. Die Lagerschale ist geteilt und besteht aus einem ersten, äußeren Teil 4, das das hohlzylindrische Teil 2 in Radialrichtung von außen und in Axialrichtung an seiner Bodenseite umfaßt. Das zweite, innere Teil 5 der Lagerschale, die aus einem austenitischen Sintermaterial hergestellt sein kann, setzt sich aus einem Teil zusammen, das den Zwischenraum zwischen der Welle 1 und deren hohlzylindrischem Teil 2 ausfüllt und aus einem weiteren Teil, das letzteres an seiner offenen Seite axial abstützt. Es stehen somit je drei Radiallagerflächen 11, 21, 22 und Axiallagerflächen 23, 24, 25 zur Verfügung. Die Lagerschale wird eingeschlossen in ein Gehäuse 6 mit Deckel 7. Im Gehäuse 6 sind zwei Öffnungen 61, 62 angelegt, durch die hindurch die getrennte Versorgung der Lagerschalen 4, 5 erfolgt (auf die Darstellung von Anschlußleitungen, Ventilen usw. wurde hier verzichtet). Der weitere Fluß des Speisegases wird durch die Pfeile verdeutlicht. Dabei sind im Deckel 7 Bohrungen 71 vorhanden, durch die hindurch die Lagerfläche 23 mit Speisegas versorgt wird. Um eine gleichmäßige Versorgung der Lagerflächen 11, 21 und 24 mit Gas zu gewährleisten, weist die zweite Lagerschale 5 mehrere achsparallele, über den Umfang verteilte Bohrungen 51 auf. Das verbrauchte Speisegas fließt teils über den Spalt zwischen Welle 1 und Gehäuse 6 bzw. Ring 3 und Deckel 7 ab, teils über besondere, im Gehäuse 6 bzw. Deckel 7 angelegte weitere Bohrungen 63 bzw. 72 (letztere ist versetzt gezeichnet und schneidet die Bohrung 71 nicht). Ebenso sind im hohlzylindrischen Teil 2 Abflußbohrungen 26, 27 und in der ersten Lagerschale 4 eine Abflußbohrung 41 angelegt. Um hier die Trennung zwischen frischem und verbrauchtem Speisegas aufrechtzuerhalten und damit das Entstehen von Kurzschlußströmen zu verhindern, ist die Fläche der Bohrung 41 so nachbearbeitet, daß ihre Poren geschlossen wurden.

85 P G 749 E

0221352

Gasstatisches Lager mit unterteilten Lagerflächen

Patentansprüche

1. Gasstatisches Lager mit einer Lagerschale (4, 5) oder einer zu lagernden Welle (1, 2), die aus einem porösen Material bestehen, das an den Lagerflächen (11, 21 - 25) gezielt verdichtet ist,
d a d u r c h   g e k e n n z e i c h n e t ,
daß die Lagerflächen (11, 21 - 25) auf zwei oder mehr konzentrisch umeinander und um die Achse angeordnete Zylindermantelflächen und/oder mehrere auf der Achse hintereinander angeordnete Kreisflächen verteilt sind.

2. Lager nach Anspruch 1,
d a d u r c h   g e k e n n z e i c h n e t ,
daß die Welle aus einem zylindrischen Teil (1) besteht, auf das ein hohlzylindrisches, einseitig mit einem Boden versehenen Teil (2) aufgesetzt ist.

3. Lager nach Anspruch 2 mit poröser Lagerschale (4, 5),
d a d u r c h   g e k e n n z e i c h n e t ,
daß eine erste Lagerschale (4) von hohlzylindrischer, einseitig mit einem  Flansch versehener, das hohlzylindrische Teil (2) der Welle von außen umfassender Form vorhanden ist.

4. Lager nach Anspruch 2 mit poröser Lagerschale (4, 5),
d a d u r c h   g e k e n n z e i c h n e t ,
daß eine zweite Lagerschale (5) von hohlzylindrischer, einseitig mit einem Flansch versehener, den Zwischenraum zwischen zylindrischem (1) und hohlzylindrischem (2) Teil der Welle ausfüllender Form vorhanden ist.

5. Lager nach Anspruch 2 und 4,
d a d u r c h   g e k e n n z e i c h n e t ,
daß je Lagerschale (4, 5) eine getrennte Zufuhrleitung (61, 62) für Speisegas vorhanden ist.

6. Lager nach einem oder mehreren der Ansprüche 2 bis 4,
d a d u r c h   g e k e n n z e i c h n e t ,
daß die Welle (1, 2) und /oder die Lagerschalen (4, 5) mit Abflußkanälen (26, 27, 41) für das verbrauchte Speisegas versehen sind.

7. Lager nach Anspruch 6 mit Abflußkanälen (41) in der ersten Lagerschale (4),
d a d u r c h   g e k e n n z e i c h n e t ,
daß die Abflußkanäle (41) gegenüber der ersten Lagerschale (4) abgedichtet sind.

8. Lager nach Anspruch 4,
d a d u r c h   g e k e n n z e i c h n e t ,
daß die zweite Lagerschale (5) mit etwa achsparallelen Bohrungen (51) für die Speisegaszufuhr versehen ist, die in ihr zwischen zylindrischem (1) und hohlzylindrischem Teil (2) der Welle gelegenes Teil führen.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | WO-A-8 101 449 (JEUMONT-SCHNEIDER) * Seite 2, Zeilen 18-26; Figuren 2,3 * | 1 | F 16 C 32/06 |
| A | | 2,5,6, 8 | |
| | --- | | |
| Y | US-A-2 696 410 (TOPANELIAN) * Spalte 2, Zeile 4 - Spalte 3, Zeile 11; Figur 1 * | 1 | |
| | --- | | |
| A | GB-A-2 108 595 (M.T.U.) * Seite 2, Zeilen 30-38; Figur 2 * | 1 | |
| | --- | | RECHERCHIERTE SACHGEBIETE (Int. Cl.4) |
| A | US-A-3 827 767 (SINNER) | | F 16 C F 01 D |
| | --- | | |
| A | US-A-4 330 159 (KAKIMOTO) | | |
| | --- | | |
| D,A | DE-A-3 230 232 (INTERATOM) | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 16-01-1987 | BARON C. |